# FASCICULE DE BREVET EUROPEEN

(11) **EP 1 513 672 B1**
(45) Date de publication et mention de la délivrance du brevet: **04.04.2007**
(21) Numéro de dépôt: 03732489.4
(22) Date de dépôt: 28.05.2003
(51) Int. Cl.: B29D 30/16, B29C 47/92

(54) **FABRICATION D'UNE STRUCTURE DE RENFORCEMENT POUR PNEUMATIQUE AVEC CONTROLE VOLUMETRIQUE DE LA MATRICE**
HERSTELLUNG EINER REIFENVERSTÄRKUNGSSTRUKTUR MIT DER VOLUMENREGELUNG DER MATRIX
SYSTEM FOR PRODUCING A REINFORCING STRUCTURE FOR A TYRE WITH VOLUMETRIC CONTROL OF THE DIE

(30) Priorité: 03.06.2002 FR 0206822
(43) Date de publication de la demande: 16.03.2005
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: PIALOT, Frédéric, 63190 Moissat (FR)
(74) Mandataire: Bauvir, Jacques
(86) Numéro de dépôt international: PCT/EP2003/005625
(87) Numéro de publication internationale: WO 2003/101714

(56) Documents cités:
- EP-A- 0 557 615
- EP-A- 0 791 485
- EP-A- 0 943 421
- EP-A- 0 956 940
- FR-A- 2 669 582
- GB-A- 987 983
- US-A- 5 221 406

## Description

La présente invention concerne la fabrication des pneumatiques. Plus précisément, elle se rapporte à la mise en place de fils pour constituer une structure de renforcement pour pneumatique. Plus particulièrement, elle propose des moyens aptes à fabriquer une telle structure de renforcement sur une forme proche ou identique de la forme de la cavité interne du pneumatique, c'est à dire une forme sensiblement toroïdale, supportant l'ébauche d'un pneumatique pendant sa fabrication.

Dans ce domaine technique, on connaît déjà des procédés et appareils qui permettent d'intégrer la fabrication des structures de renforcement de pneumatique à l'assemblage du pneumatique lui-même. Cela signifie que, plutôt que de recourir à des produits semi-finis, comme des nappes de renforcement, on réalise une ou des structures de renforcement in situ, au moment où l'on fabrique le pneumatique, et à partir d'une seule bobine de fil.

Parmi ces procédés et appareils, la solution décrite dans le brevet US 4 804 436 propose de réaliser des structures de renforcement à partir d'un seul fil. Cette solution permet notamment la réalisation d'une structure de renforcement sous la bande de roulement.

Il est également bien connu de réaliser une structure de renforcement pour pneumatique à partir d'une bandelette comportant des fils de renforcement parallèles entre eux et noyés dans une composition élastomérique comme une composition de caoutchouc. Une telle bandelette est découpée en tronçons et les tronçons sont déposés de façon adjacente sur un support de fabrication, là où l'architecture le commande, pour réaliser la structure de renforcement du pneumatique souhaité par le concepteur du pneumatique. Parmi les différentes variantes d'un procédé de fabrication à partir de bandelettes, on peut citer le brevet US 1 728 957 qui décrit une fabrication de bandelettes, puis une découpe de tronçons et un arrangement de bandelettes sur une forme de fabrication sensiblement toroïdale en veillant à conserver un pas aussi constant que possible entre les fils adjacents dans le tronçon.

Le brevet GB 987983 décrit un procédé selon lequel des produits semi-finis sont préparés sur une première machine et ensuite un pneumatique est assemblé à partir de ces semi-finis sur une autre machine.

Des procédés similaires sont décrits dans les brevets EP 557 615 et EP 943421.

Dans ces procédés de l'état de la technique la formation des tronçons de bandelette et leur pose sur la forme sont séparées.

La technique de fabrication de structures de renforcement à partir d'une bandelette n'a cependant pas trouvé beaucoup d'applications industrielles car, d'une part elle n'a pas la productivité d'une fabrication à partir de nappes, et d'autre part elle n'a pas la souplesse et la précision d'une technique de fabrication à partir d'un fil individuel. Lorsque l'on souhaite fabriquer un pneumatique selon une technique n'apportant que peu ou pas du tout de conformation du produit cru pendant sa fabrication, il est de première importance de pouvoir déposer les structures de renforcement et les produits en caoutchouc cru constituant le futur pneumatique avec une très grande précision aussi bien sur leur positionnement que sur la quantité de matière déposée sur la forme de fabrication.

L'objectif de la présente invention est de proposer un procédé et un appareillage qui permettent la fabrication d'une structure de renforcement pour pneumatique par dépose sur une forme de fabrication, et ceci avec une très grande précision de pose, une très bonne efficacité, et par des moyens aussi simples que possibles, gages d'une très grande robustesse industrielle. Avantageusement, cette forme de fabrication est proche de la forme de la cavité interne du futur pneumatique.

La présente invention se réfère à un procédé de fabrication d'un pneumatique selon les étapes spécifiées dans la revendication 1.

La présente invention se réfère aussi à un appareil de fabrication d'une structure de renforcement pour pneumatique selon les caractéristiques spécifiées dans la revendication 10.

Des formes avantageuses de l'invention font l'objet des revendications dépendantes.

L'invention propose un procédé de fabrication d'un pneumatique comportant une structure de renforcement comportant des fils disposés sensiblement parallèlement les uns par rapport aux autres, le procédé utilisant une forme sensiblement toroïdale sur laquelle on construit progressivement ladite structure de renforcement, le procédé comportant les étapes suivantes :
- former un groupe de plusieurs fils disposés sensiblement parallèlement les uns par rapport aux autres,
- réunir les fils au moyen d'une composition élastomérique pour former une bandelette,
- déposer ladite bandelette selon une trajectoire prédéterminée à la surface de ladite forme,
dans lequel, pour une longueur unitaire de bandelette, on utilise une quantité unitaire de ladite composition déterminée en fonction de la part prise par ladite longueur unitaire de bandelette après sa dépose sur la forme dans la fabrication du pneumatique.

L'invention propose un appareil de fabrication in situ de bandelette pour fabriquer une structure de renforcement pour pneumatique et dépose de la bandelette sur une forme, avec contrôle volumétrique. Cet appareil de fabrication d'une structure de renforcement pour pneumatique, ladite structure de renforcement comportant des fils disposés sensiblement parallèlement les uns par rapport aux autres, ledit appareil étant destiné à être utilisé en coopération avec une forme sensiblement toroïdale sur laquelle on construit progressivement ladite structure de renforcement en déposant côte à côte des arceaux dudit fil selon une trajectoire souhaitée pour ledit fil à la surface de ladite forme, comprend :
- un assembleur comportant une entrée pour recevoir les fils, une chambre de gommage, une pompe volumétrique pour refouler une composition élastomérique à l'intérieur de la chambre, un orifice de sortie d'une bandelette comprenant les fils réunis par ladite composition,
- un dispositif de dépose de ladite bandelette comportant un bâti de référence par rapport auquel on peut installer ladite forme à une position connue, le dispositif de dépose comportant une tête équipée d'un couloir de guidage de la bandelette et d'un organe de rouletage destiné à coopérer avec ladite forme, l'appareil comportant au moins un actionneur pour guider ladite tête par rapport au bâti de référence.

Dans un mode de réalisation particulier, l'appareil permet la dépose de la bandelette sur ladite forme, avec retournement d'une couche à la suivante.

Notons tout d'abord que, dans le contexte du présent mémoire, le terme « fil » doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le fil soit pré revêtu d'un élastomère comme du caoutchouc ou non. On utilise le terme « bandelette » pour désigner un assemblage de plusieurs fils parallèles, réunis par une matrice de caoutchouc cru. On emploie le terme « tronçon » pour désigner un morceau de bandelette, créé par la coupe d'une certaine longueur de bandelette. Un tronçon de bandelette permet la dépose de plusieurs arceaux de fil. On appelle « arceau » une longueur limitée de fil, allant d'un point singulier à un autre dans le pneumatique en tant que produit fini, vulcanisé. On appelle « trajectoire » la trace exacte d'un arceau dans le pneumatique fini. Un ensemble d'arceaux disposés sur tout le pourtour du pneumatique forme une structure de renforcement. Un arceau, au sens défini ici, peut faire partie d'une carcasse, ou d'un renfort de sommet, ou de tout autre type de structure de renforcement.

Fondamentalement, l'invention traite de la dépose de tronçons successifs de bandelette de fils, dans une configuration aussi proche que possible de la configuration dans le produit final. Il importe peu que la structure de renforcement soit, pour être complète, fabriquée en plusieurs rotations successives de la forme ou non, ni que les tronçons successivement déposés le soient de façon adjacente ou au contraire avec un certain espace entre eux. La dépose de tronçons de bandelette sur la forme de fabrication se fait en fonction de la trajectoire recherchée. Dans le cas (particulier et non limitatif) d'une forme dont la surface extérieure définit la surface intérieure du pneu, limitant la cavité interne du pneu, la trajectoire de dépose d'un tronçon de bandelette se confond avec la trajectoire d'un arceau de fil dans le pneu.

Lorsque l'on définit des positions, des directions ou des sens avec les mots « radialement, axialement, circonférentiellement », ou lorsque l'on parle de rayons, on prend pour repère la forme sur laquelle on fabrique le pneumatique, ou le pneumatique par lui-même. L'axe géométrique de référence est l'axe de rotation de la forme.

Selon un aspect particulier du procédé proposé par l'invention, la quantité unitaire est obtenue par un pilotage volumétrique, la part prise étant estimée en fonction du volume occupé par ladite longueur unitaire. On utilise donc de préférence une extrudeuse à caractère volumétrique. En variante, on pourrait piloter des poids et viser des contributions pondérales. Une unité de contrôle assure le pilotage en synchronisme de la quantité unitaire de composition utilisée et de la dépose de la longueur unitaire de bandelette sur la forme. De façon avantageuse, la formation de la bandelette est effectuée par des organes disposés à une position fixe dans l'espace, et la bandelette est ensuite amenée à une tête de pose dont au moins une sortie de pose est mobile par rapport à la forme. Ainsi, les organes mobiles sont moins lourds ; il est donc plus facile de les mouvoir. Bien entendu de préférence, on pilote ladite quantité unitaire en tenant compte de la longueur de bandelette accumulée entre la formation de la bandelette et la tête de pose.

Selon un autre aspect particulier du procédé proposé par l'invention, la construction progressive de la structure de renforcement intervient alors que ladite forme est en rotation continue, en déplaçant la tête de pose dans un plan comprenant l'axe de rotation de la forme. Pour obtenir tous les mouvements relatifs requis pour la pose de la bandelette à la surface de la forme, on peut déplacer la sortie de pose transversalement et parallèlement par rapport à l'axe de la forme, et faire tourner la forme autour de son axe, ces mouvement étant judicieusement combinés. On peut concevoir une mise en oeuvre du pilotage où le pilotage de la quantité unitaire de composition est esclave du mouvement relatif entre sortie de pose et forme, ou l'inverse. Le pilotage de la quantité unitaire est avantageusement asservi à la rotation de la forme. De préférence, on forme une bandelette de section constante, et dans lequel ledit volume occupé par la longueur unitaire est déterminé en fonction du rayon de dépose à la surface de la forme et de l'angle de l'arc occupé par la longueur unitaire à la surface de la forme.

Selon une caractéristique particulière et non limitative du procédé proposé par l'invention, pour réunir les fils au moyen d'une composition élastomérique, lesdits fils sont introduits en parallèle dans un assembleur comportant une chambre de formation à l'intérieur de laquelle ladite composition est refoulée, l'assembleur comportant un orifice de sortie pour la bandelette.

La suite de la description permet de bien faire comprendre tous les aspects de l'invention, en s'appuyant sur les figures suivantes qui montrent un exemple particulier, et non limitatif, d'un appareil selon l'invention :
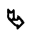 La figure 1 représente en perspective un appareil selon l'invention.
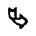 La figure 2 est une vue suivant la flèche B à la figure 1.
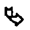 La figure 3 est un agrandissement montrant plus en détails l'organe visé par la référence 5 à la figure 1.
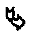 La figure 4 est une vue en perspective du même appareil que celui illustré par la figure 1 dans une autre phase de fonctionnement.
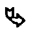 La figure 5 est une vue suivant la flèche C à la figure 4 .
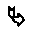 La figure 6 est un agrandissement montrant plus en détails l'organe visé par la référence 41 à la figure 1.

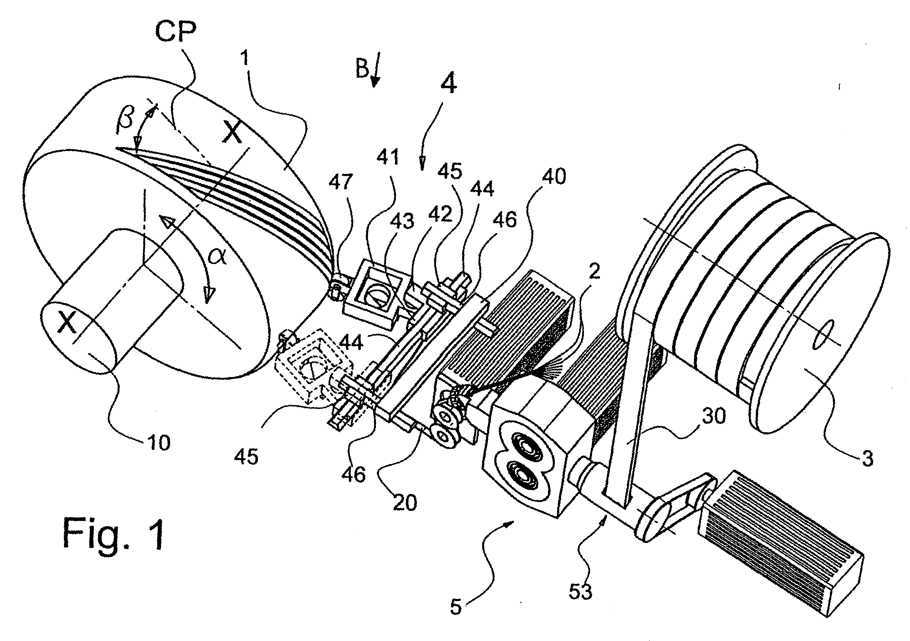

A la figure 1, on voit une forme 1 sur laquelle on dépose, successivement et dans l'ordre requis par l'architecture du pneumatique, tous les éléments constitutifs de celui-ci. Cette forme 1, sensiblement rigide, peut être par exemple un noyau métallique rigide en plusieurs pièces tel qu'on peut en trouver une description dans la demande de brevet EP 1075928.

Le fil 2 de renforcement utilisé est stocké en amont de l'installation, par exemple sur un ensemble de bobines, chacune montée sur un axe faisant partie d'une crémaillère permettant de stocker autant de bobines de fils qu'il y a de fils dans une bandelette. Un dispositif de déroulage de fils 2 (non représenté pour ne pas surcharger le dessin) permet d'entraîner les fils 2 afin de les amener à l'appareil de fabrication d'une structure de renforcement pour pneumatique. De préférence, le dispositif de déroulage de fils 2 comprend autant de moteurs qu'il y a de bobines, chaque moteur permettant d'entraîner un fil 2. Le dispositif de déroulage de fils 2 permet d'entraîner les fils 2 avec une tension bien maîtrisée, par exemple aussi faible que possible.

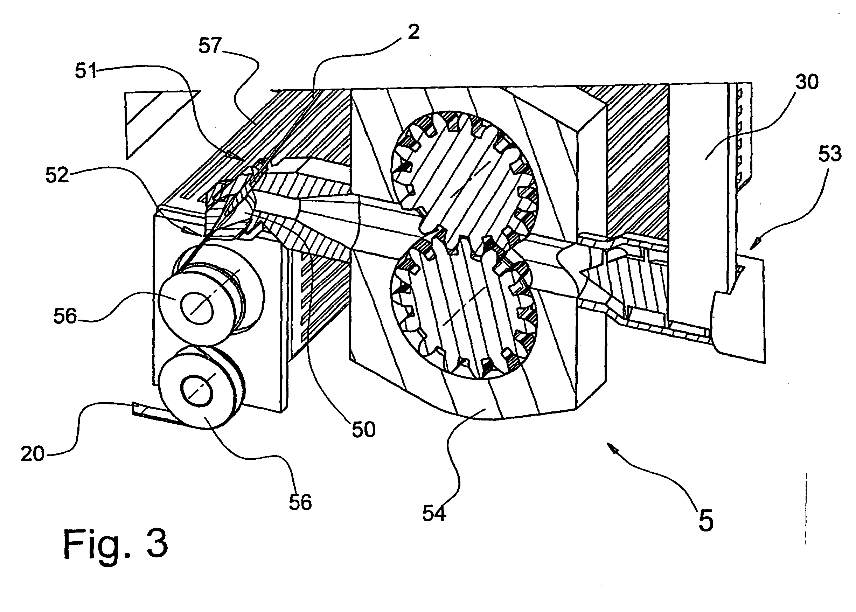

L'appareil proprement dit comporte essentiellement un assembleur 5 et une tête de pose 4. L'assembleur 5 comporte un orifice d'entrée 51 (voir figure 3) jusqu'auquel les fils 2 cheminent individuellement (les figures 1, 3 et 4 sont schématiques). L'assembleur 5 comporte un orifice d'alimentation 53 permettant d'introduire un ruban 30 d'une composition de caoutchouc cru adaptée à l'usage de la bandelette dans le futur pneumatique. On voit également une bobine 3 sur laquelle est enroulée ledit ruban 30. Le ruban 30 est engagé dans l'orifice d'alimentation 53 de l'assembleur 5. L'assembleur 5 comporte un dispositif de refoulement à caractère volumétrique, à savoir une pompe volumétrique 54.

Selon une caractéristique de la présente invention, on contrôle positivement la quantité de composition permettant de fabriquer la bandelette en fonction de la position de la bandelette sur la forme. Dans le mode de réalisation décrit ici, cela se fait en utilisant une pompe mécaniquement volumétrique. La pompe volumétrique 54 est par exemple une pompe à engrenage, comme représenté, ou une pompe à pistons. On trouve la description d'une pompe à pistons dans le brevet US 5 655 891.

Le dispositif de refoulement (appelé ici également « pompe volumétrique 54 ») permet de refouler du caoutchouc cru 30 dans une chambre de formation 50 d'une bandelette 20. L'assembleur 5 comporte un orifice de sortie 52 pour la bandelette 20. L'assembleur 5 comporte deux galets 56 autour desquels la bandelette 20 est enroulée. Au moins un des galets 56 est entraîné en rotation par un moteur 57.

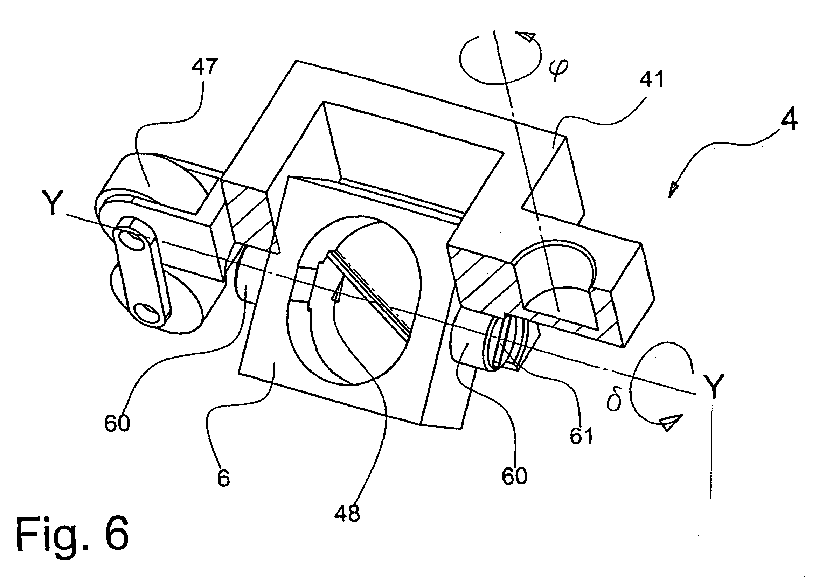

La tête de pose 4 est monté en regard de la forme 1. Elle comporte un bâti 40, sur lequel est monté un berceau 41 au moyen du mécanisme décrit ci-après. Le berceau 41 est monté via un pivot 42 sur un chariot 43. Grâce au pivot 42, le berceau 41 peut être orienté selon un angle ϕ visible à la figure 6 . La tête de pose 4 comporte également un dispositif de rouletage 49 comportant au moins un galet 47 (deux galets semblables pour une meilleure prise sur la bandelette). Le dispositif de rouletage 49 peut être basculer autour de l'axe YY d'un angle δ. Le dispositif de rouletage 49 permettant d'appliquer la bandelette 20 avec une certaine pression sur la forme 1. Le chariot 43 est monté sur une glissière 44 sensiblement parallèle à l'axe de rotation XX de la forme 1. La glissière 44 est elle-même montée sur deux rails 46 parallèles entre eux, sensiblement perpendiculaires à ladite glissière 44, au moyen de deux coulisseaux 45.

Dans le berceau 41, un cadre 6 est monté sur deux paliers 60. Chacun des paliers 60 comporte une fente 61 centrée sur l'axe des paliers 60. La bandelette 20 peut cheminer au travers des fentes 61 qui organisent un couloir de guidage pour la bandelette 20. Le cadre 6 peut tourner d'au moins 180° par rapport au berceau 41. Le cadre 6 ainsi monté sur le berceau 41 forme un mécanisme de retournement est une réalisation particulière et non limitative d'un dispositif de dépose de ladite bandelette comportant un mécanisme de retournement de la bandelette permettant d'inverser la face de la bandelette qui est amenée au contact de la forme par la tête de pose.

Un organe de coupe 48 de la bandelette, tel qu'une guillotine (dont on voit la lame à la figure 6 , la contre-lame étant omise), est intégré au cadre 6, donc à la tête de pose 4.

La forme 1 est supportée par un porte-moyeu 10, comportant un moyeu auquel la forme 1 et attachée, et comportant la motorisation nécessaire permettant d'entraîner la forme 1 en rotation, à azimut α contrôlé à tout moment. Le bâti 40 est monté fixe par rapport au porte-moyeu 10, au moins pendant le fonctionnement de l'installation (on n'abordera pas ici les aspects d'approche et d'évacuation de la forme 1).

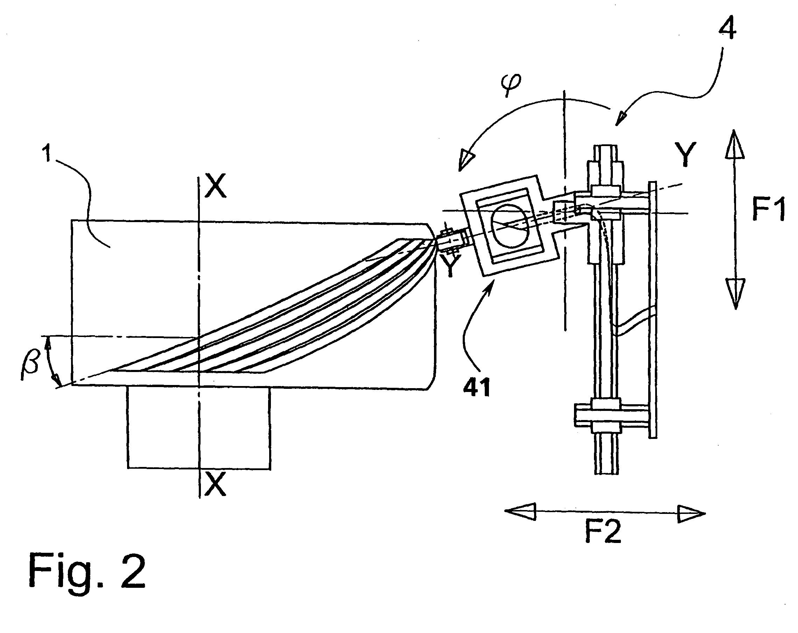

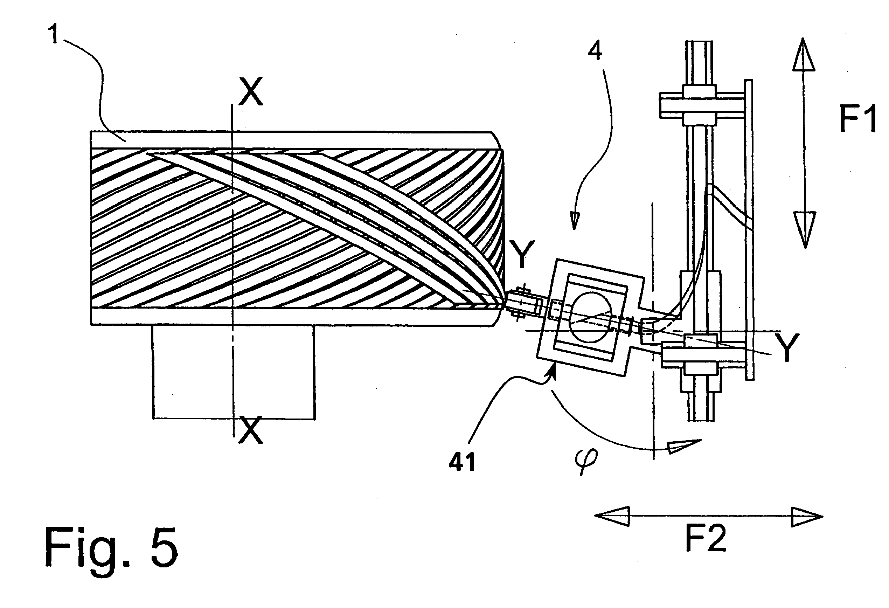

Le berceau 41 peut être présenté dans toutes les positions voulues par rapport à la forme 1 (voir figures 1, 2, 4 et 5). C'est à dire qu'il peut être déplacé radialement par rapport à la forme 1 (flèche F₂), peut coulisser transversalement par rapport à la forme 1 (flèche F₁), et peut être incliné autour de l'axe YY (angle δ) par rapport à la forme 1, et orienté selon l'angle ϕ. On peut donc présenter la bandelette 20 à la forme 1 dans toutes les positions souhaitables pour assurer, en combinaison avec la rotation de la forme 1, sa dépose selon toute trajectoire de dépose recherchée.

Ainsi, on peut déposer la bandelette 20 selon tout angle β par rapport au plan méridien CP, pour former une structure de renforcement selon tout angle β, même variable.

On va maintenant décrire le fonctionnement de l'appareil selon l'invention.

Selon un aspect particulier de l'invention, l'appareil comporte une unité de contrôle du mouvement de rotation de la forme, du mouvement de la tête par rapport au bâti et de la pompe volumétrique, ladite unité étant configurée de façon à ce que la quantité par unité de longueur de bandelette, de composition engagée à l'intérieur de la chambre de gommage par la pompe volumétrique soit fonction de la position occupée par ladite unité de longueur de bandelette pendant sa dépose sur la forme.

Selon un autre aspect particulier de l'invention, l'appareil peut comporter une unité de contrôle du mouvement de rotation de la forme, du mouvement de la tête par rapport au bâti et de la pompe volumétrique, ladite unité étant configurée de façon à ce que le volume, par unité de longueur de bandelette, de composition engagé à l'intérieur de la chambre de gommage par la pompe volumétrique, soit fonction du volume occupé par ladite unité de longueur de bandelette après sa dépose sur la forme.

On voit à la figure 1 que la tête de pose 41 se trouve au voisinage de l'épaule droite du futur pneumatique, dont on imagine bien la forme en examinant le noyau rigide 1 sur lequel on va le construire. L'extrémité libre de la bandelette, précédemment coupée en formant un angle β, est présentée à la surface de la forme et y est maintenue par le galet 47, à l'endroit voulu dans la zone d'épaule du futur pneumatique. Bien entendu, la matière contre laquelle on applique la bandelette 20 doit être telle que la bandelette 20 a tendance à rester collée. Typiquement, la forme est déjà revêtue de caoutchouc cru, collant naturellement avec la composition de caoutchouc cru 30.

La composition élastomérique est refoulée dans la chambre de formation 50, au moyen du dispositif de refoulement 54. Celui-ci permet d'introduire sous une certaine pression le caoutchouc cru à l'intérieur de la chambre de formation 50, de façon à ce que le caoutchouc la remplisse totalement. Pendant que l'ensemble des fils 2 traverse la chambre de formation 50, un volume de caoutchouc contrôlé est introduit dans la chambre de formation 50. Le paramètre de base pour les asservissements assurés par l'unité de contrôle est la rotation de la forme 1. Par ailleurs, les moyens d'animation de la tête de pose 4 par rapport à la forme 1, dont le fonctionnement est décrit ci-dessous, sont eux-mêmes pilotés de façon à réaliser une certaine trajectoire de dépose en fonction de l'architecture du pneu à fabriquer. On connaît donc à tout moment notamment le rayon auquel la bandelette est déposée, ce qui permet compte tenu de la constitution de la bandelette, elle aussi déterminée par l'architecture du pneumatique, de calculer le volume déposé sur la forme. On connaît aussi le volume occupé par les fils de renforcement en eux-mêmes.

C'est à partir de la rotation de la forme 1, et compte tenu de sa géométrie connue et des mouvements de la tête de pose 41, et compte tenu de l'encours (stock de bandelette existant entre la chambre de formation 50 et l'endroit où la bandelette rejoint la forme 1), que l'unité de contrôle détermine donc le volume de caoutchouc à introduire dans la chambre de formation 50. En même temps, les fils 2 entraînent ce même volume de caoutchouc hors de la chambre de formation 50. Ainsi, la bandelette 20 apparaissant à l'orifice d'extrusion 52 comporte l'ensemble des fils 2 déroulés en parallèle et une quantité bien maîtrisée de caoutchouc d'imprégnation 30. La bandelette 20 est elle-même motorisée au moyen des galets 56 et du moteur 57 de façon à ce qu'elle soit entraînée hors de la chambre 50 avec une tension sensiblement constante.

On voit une zone de compensation, interposée entre l'assembleur 5 et le dispositif de pose 4, dans laquelle une certaine longueur (connue) de bandelette est accumulée. Cela permet d'assurer sans heurt le fonctionnement essentiellement continu de l'assembleur 5 et le fonctionnement essentiellement discontinu de la tête de pose 41, et permet donc de lisser la formation de bandelette par rapport aux variations de vitesse de la forme 1, dont on a dit ci-dessus qu'il s'agit d'un paramètre de base du pilotage assuré par l'unité de contrôle.

Afin de pouvoir éviter les effets néfastes de dérive du fonctionnement, il est avantageux de mesurer la longueur de bandelette réellement utilisée, indépendamment des paramètres d'asservissement qui calculent en permanence la longueur de bandelette à fabriquer. Un galet de mesure, de préférence indépendant du ou des galets 47 (non représenté) est équipé d'un codeur qui permet de connaître à tout moment et avec précision la longueur de bandelette déposée sur la forme 1. Ceci permet d'ajuster la fabrication de bandelette à la quantité de bandelette effectivement déposée sur la forme 1.

Le noyau 1 est entraîné en rotation (angle α) et le berceau 41 est mobile par rapport à la forme. Le berceau 41 est translaté de droite vers la gauche (flèche F₁) pour rejoindre la position où elle est dessinée en traits interrompus, tout ceci de façon synchrone. Pendant que le berceau 41 se déplace sur une largeur qui correspond à la largeur de la structure de renforcement fabriquée sous la bande de roulement du pneumatique, le noyau 1 est entraîné en rotation de façon à parcourir un arc α. Pendant ces mouvements, la bandelette 20 est appliquée sur la forme 1 par le galet de rouletage 47. Vers la fin de ces mouvements, la guillotine intégrée à la tête de pose sectionne la bandelette tout en respectant l'angle que l'on souhaite donner au bord de la bandelette. Cet angle correspond à l'angle que doit former le bord du tronçon suivant. Il n'y a donc aucune perte de matière entre deux tronçons successifs.

Afin de permettre le fonctionnement automatique, la bandelette est en permanence en prise dans la tête de pose 4. Un dispositif d'avance automatique (non représenté) de la bandelette après coupe permet que son extrémité libre soit à nouveau en prise avec le dispositif de rouletage 49 après la coupe, afin de pouvoir à nouveau être présentée à la forme 1 et pressée sur celle-ci. L'unité de contrôle connaît en permanence la longueur de bandelette accumulée et non posée, ce qui permet de tenir compte de cet encours dans le contrôle volumétrique de la quantité unitaire de composition par longueur unitaire de bandelette.

De proche en proche, on dépose sur la forme le nombre voulu de tronçons de bandelette de façon par exemple adjacente, en recouvrant progressivement toute la périphérie de la forme de fabrication. De part la formation de la bandelette telle qu'elle est décrite ici, le pas entre tous les fils est constant dans la bandelette. Au final, on peut au choix s'arranger de façon à maintenir le même pas ou un pas différent entre les fils adjacents issus de deux bandelettes différentes.

L'opération de dépose des tronçons de bandelette 20 peut entraîner autant de tours complets de la forme 1 qu'il y a de tronçons de bandelettes pour réaliser une structure de renforcement complète ou bien, dès que la tête de pose rejoint l'épaule gauche du futur pneumatique, elle peut être ramenée à l'épaule opposée sans interrompre la rotation de la forme 1 et un autre tronçon de bandelette peut être déposé dès que la tête de pose a rejoint l'épaule droite. Il suffit de s'arranger pour laisser un espace entre les deux tronçons posés correspondant à un nombre entier de tronçons qui seront installés au cours de rotations successives.

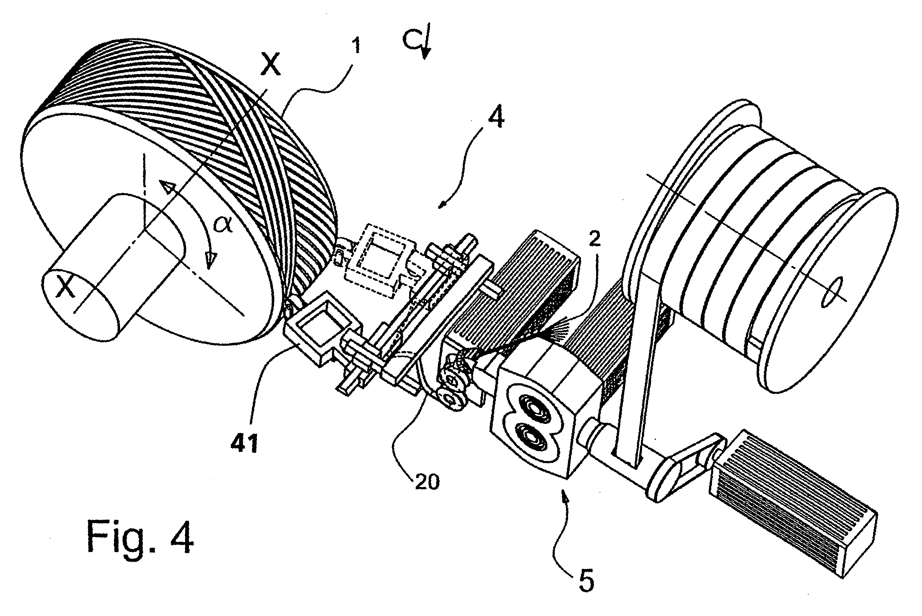

Pour passer d'une couche à la couche suivante (on appelle cela également pour passer d'une nappe à la nappe suivante), selon une caractéristique avantageuse de la présente invention, un dispositif de retournement est intégré à la tête de pose. Il suffit de faire pivoter le cadre 6 de 180° et la bandelette 20 est prête à effectuer la dépose de la couche suivante. On reprend alors les mouvements exposés ci-dessus, à ceci près que l'on agit de gauche à droite au lieu de travailler de droite vers la gauche. C'est ce que l'on a représenté à la figure 4 .

Dans une application particulière, l'invention permet de fabriquer une structure de renforcement comportant de multiples arceaux de fils obtenus en déposant successivement des tronçons de bandelette adjacents créés par coupe de la bandelette. Dans un cas plus particulier encore, ladite structure de renforcement fait partie d'une ceinture située sous la bande de roulement. Dans un autre cas plus particulier, ladite structure de renforcement fait partie d'une carcasse allant jusqu'à un bourrelet au moins.

L'invention permet de déposer les fils de renforcement par groupes formant une bandelette avec une précision de pose bien meilleure que ce que proposait l'état de la technique jusqu'à présent pour les techniques de fabrication à partir de bandelettes. Par ailleurs, grâce au dispositif de retournement de bandelette proposé par la présente invention, le passage d'une couche à une autre avec changement d'angle formé par les fils de renforcement peut se faire extrêmement rapidement, sans ralentir en aucune façon la cadence de fabrication d'un appareil selon l'invention, et sans perte de matière.

## Revendications

1. Procédé de fabrication d'un pneumatique comportant une structure de renforcement comportant des fils disposés sensiblement parallèlement les uns par rapport aux autres, le procédé utilisant une forme (1) sensiblement toroïdale sur laquelle on construit progressivement ladite structure de renforcement, le procédé comportant les étapes suivantes :
• former in situ un groupe de plusieurs fils (2) disposés sensiblement parallèlement les uns par rapport aux autres,
• réunir in situ les fils au moyen d'une composition élastomérique pour former une bandelette (20),
• couper in situ des tronçons successifs de ladite bandelette
• déposer successivement lesdits tronçons de ladite bandelette selon une trajectoire prédéterminée à la surface de ladite forme,
dans lequel, pour former une longueur unitaire de bandelette, on utilise une quantité unitaire de ladite composition déterminée en fonction de la part prise par ladite longueur unitaire de bandelette après sa dépose sur la forme dans la fabrication du pneumatique.

2. Procédé selon la revendication 1 dans lequel la quantité unitaire utilisée est obtenue par un pilotage volumétrique, la part prise étant estimée en fonction du volume occupé par ladite longueur unitaire.

3. Procédé selon la revendication 1 ou 2 dans lequel on forme une bandelette de section constante, et dans lequel ledit volume occupé par la longueur unitaire est déterminé en fonction du rayon de dépose à la surface de la forme et de l'angle de l'arc occupé par la longueur unitaire à la surface de la forme.

4. Procédé selon l'une des revendications 1 à 3 dans lequel la formation de la bandelette est effectuée par des organes disposés à une position fixe dans l'espace, et dans lequel la bandelette est ensuite amenée à une tête de pose dont au moins une sortie de pose est mobile par rapport à la forme, et dans lequel on pilote ladite quantité unitaire en tenant compte de la longueur de bandelette accumulée entre la formation de la bandelette et la tête de pose.

5. Procédé selon la revendication 4, dans lequel la construction progressive de la structure de renforcement intervient alors que ladite forme est en rotation, en déplaçant la tête de pose dans un plan comprenant l'axe de rotation de la forme, le pilotage de la quantité unitaire étant asservi à la rotation de la forme.

6. Procédé selon l'une des revendications 1 à 5 dans lequel, pour réunir les fils au moyen d'une composition élastomérique, lesdits fils sont introduits en parallèle dans un assembleur comportant une chambre de formation à l'intérieur de laquelle ladite composition est refoulée, l'assembleur comportant un orifice de sortie pour la bandelette.

7. Procédé selon l'une des revendications 1 à 6, dans lequel ladite structure de renforcement comporte de multiples arceaux de fils obtenus en déposant successivement des tronçons de bandelette adjacents.

8. Procédé selon l'une des revendications 1 à 7, dans lequel ladite structure de renforcement fait partie d'une ceinture située sous la bande de roulement.

9. Procédé selon l'une des revendications 1 à 7, dans lequel ladite structure de renforcement fait partie d'une carcasse.

10. Appareil de fabrication d'une structure de renforcement pour pneumatique, ladite structure de renforcement comportant des fils disposés sensiblement parallèlement les uns par rapport aux autres, ledit appareil étant destiné à être utilisé en coopération avec une forme (1) sensiblement toroïdale sur laquelle on construit progressivement ladite structure de renforcement en déposant côte à côte des arceaux dudit fil selon une trajectoire souhaitée pour ledit fil à la surface de ladite forme,
ledit appareil comprenant :
• un assembleur (5) comportant une entrée pour recevoir les fils (2), une chambre de gommage (50), une pompe volumétrique pour refouler une composition élastomérique à l'intérieur de la chambre de gommage, un orifice de sortie d'une bandelette (20) comprenant les fils réunis par ladite composition,
• un organe de coupe (48) de tronçons successifs de la bandelette
• un dispositif de dépose (4) des tronçons successifs de ladite bandelette sur la forme comportant un bâti de référence par rapport auquel on peut installer ladite forme à une position connue, le dispositif de dépose comportant une tête équipée d'un couloir de guidage de la bandelette et d'un organe de rouletage destiné à coopérer avec ladite forme et un mécanisme de retournement de la bandelette permettant d'inverser la face de la bandelette qui est amenée au contact de la forme par la tête de pose, l'appareil comportant au moins un actionneur pour guider ladite tête par rapport au bâti de référence.

11. Appareil selon la revendication 10, comportant une unité de contrôle du mouvement de rotation de la forme, du mouvement de la tête par rapport au bâti et de la pompe volumétrique, ladite unité étant configurée de façon à ce que la quantité, par unité de longueur de bandelette, de composition engagée à l'intérieur de la chambre par la pompe volumétrique soit fonction de la position occupée par ladite unité de longueur de bandelette pendant sa dépose sur la forme.

12. Appareil selon la revendication 10, comportant une unité de contrôle du mouvement de rotation de la forme, du mouvement de la tête par rapport au bâti et de la pompe volumétrique, ladite unité étant configurée de façon à ce que le volume, par unité de longueur de bandelette, de composition engagé à l'intérieur de la chambre de gommage par la pompe volumétrique soit fonction du volume occupé par ladite unité de longueur de bandelette après sa dépose sur la forme.

13. Appareil selon la revendication 10, comportant une zone de compensation de longueur de bandelette, disposé entre l'assembleur (5) et le dispositif de dépose (4).

## Claims

1. Method of manufacturing a tyre comprising a reinforcement structure comprising threads disposed substantially parallel to each other, the method using a substantially toroidal form
(1) on which the said reinforcement structure is progressively constructed, the method comprising the following steps:
• in situ forming a group of several threads (2) disposed substantially parallel to each other,
• in situ joining the threads by means of an elastomeric composition in order to form a strip (20),
• in situ cutting the said strip into successive portions
• depositing successively the said portions of said strip along a predetermined trajectory on the surface of the said form,
wherein, in order to form a unit length of strip, a unit quantity of the said composition is used, determined according to the share taken by the said unit length of strip after its deposition on the form during the manufacture of the tyre.

2. Method according to Claim 1, in which the unit quantity used is obtained by means of a volumetric control, the share taken being estimated according to the volume occupied by the said unit length.

3. Method according to Claim 1 or 2, wherein a strip with a constant cross-section is formed, and wherein the said volume occupied by the unit length is determined according to the radius of deposition on the surface of the form and the angle of the arc occupied by the unit length on the surface of the form.

4. Method according to one of Claims 1 to 3, wherein the strip is formed by members disposed at a fixed position in space, and in which the strip is then brought to a laying head, at least one laying outlet of which is able to move with respect to the form, and in which the said unit quantity is controlled by taking account of the length of the strip accumulated between the formation of the strip and the laying head.

5. Method according to Claim 4, wherein the progressive construction of the reinforcement structure takes place whilst the said form is in rotation, by moving the laying head in a plane comprising the axis of rotation of the form, the control of the unit quantity being controlled by the rotation of the form.

6. Method according to one of Claims 1 to 5, wherein, in order to join the threads by means of an elastomeric composition, the said threads are introduced in parallel into an assembler comprising a formation chamber inside which the said composition is delivered, the assembler comprising an outlet orifice for the strip.

7. Method according to one of Claims 1 to 6, wherein the said reinforcement structure comprises many arches of threads obtained by successively depositing adjacent portions of strip.

8. Method according to one of Claims 1 to 7, wherein the said reinforcement structure forms part of a belt situated underneath the tread.

9. Method according to one of Claims 1 to 7, wherein the said reinforcement structure forms part of a carcass.

10. Apparatus for fabricating a reinforcement structure for a tyre, the said reinforcement structure comprising threads disposed substantially parallel to each other, the said apparatus being intended to be used in cooperation with a substantially toroidal form (1) on which the said reinforcement structure is progressively constructed by depositing arches of the said thread side by side along a desired trajectory for the said thread on the surface of the said form, the said apparatus comprising:
• an assembler (5) comprising an entry for receiving the threads (2), a rubber coating chamber (50), a volumetric pump for delivering an elastomeric composition inside the chamber, an exit orifice for a strip (20) comprising the threads joined by the said composition,
• a member (48) for cutting the strip into successive portions,
• a device (4) for depositing the said successive portions of said strip onto the form comprising a reference framework with respect to which the said form can be installed at a known position, the depositing device comprising a head equipped with a guidance passage for the strip and a rolling-down member intended to cooperate with the said form and a mechanism for turning over the strip making it possible to invert the face of the strip which is brought in contact with the form by the laying head, the apparatus comprising at least one actuator for guiding the said head with respect to the reference framework.

11. Apparatus according to Claim 10, comprising a unit for controlling the rotation movement of the form and the movement of the head with respect to the framework and the volumetric pump, the said unit being configured so that the quantity, per unit length of strip, of composition inserted inside the chamber by the volumetric pump is a function of the position occupied by the said unit length of strip during its deposition on the form.

12. Apparatus according to Claim 10, comprising a unit for controlling the rotation movement of the form and the movement of the head with respect to the framework and the volumetric pump, the said unit being configured so that the volume, per unit length of strip, of composition inserted inside the chamber by the volumetric pump is a function of the volume occupied by the said unit length of strip after its deposition on the form.

13. Apparatus according to Claim 10, comprising a strip length compensation area, disposed between the assembler (5) and the depositing device (4).

## Patentansprüche

1. Verfahren zur Herstellung eines Reifens mit einer Verstärkungsstruktur bestehend aus überwiegend parallel zueinander verlaufenden Fäden, bei dem ein überwiegend toroidaler Formkörper (1) zum Einsatz kommt, auf dem die Verstärkungsstruktur schrittweise aufgebaut wird, wobei das Verfahren aus folgenden Schritten besteht:
• in-situ-Bildung einer Gruppe mehrerer, überwiegend parallel zueinander verlaufender Fäden (2),
• in-situ-Zusammenfügen der Fäden mittels einer Elastomermischung zur Bildung eines Streifens (20),
• in-situ-Schneiden des Streifens in aufeinander folgende Abschnitte,
• Ablegen der Streifenabschnitte nacheinander auf der Oberfläche des Formkörpers nach einem vorbestimmten Verlauf,
bei dem zur Bildung einer einheitlichen Streifenlänge eine einheitliche Menge der Mischung verwendet wird, die in Abhängigkeit des Anteils der einheitlichen Streifenlänge nach deren Ablegen auf dem Formkörper bei der Reifenherstellung bestimmt wird.

2. Verfahren nach Anspruch 1, bei dem die eingesetzte einheitliche Menge durch Volumenstromregelung erhalten wird, wobei der Anteil in Abhängigkeit des von der einheitlichen Länge eingenommen Volumens berechnet wird.

3. Verfahren nach Anspruch 1 oder 2, bei dem ein Streifen mit konstantem Querschnitt gebildet wird und bei dem das von der einheitlichen Länge eingenommene Volumen in Abhängigkeit des Ablegeradius auf der Oberfläche des Formkörpers und des Winkels des von der einheitlichen Länge auf der Oberfläche des Formkörpers eingenommenen Bogens bestimmt wird.

4. Verfahren nach einem der Ansprüche 1 bis 3, bei dem die Bildung des Streifens durch räumlich feststehend angeordnete Teile erfolgt, und bei dem der Streifen anschließend einem Ablegekopf zugeführt wird, dessen mindestens ein Ablegeausgang im Verhältnis zum Formkörper beweglich ist, und bei dem die einheitliche Menge unter Berücksichtigung der zwischen der Bildung des Streifens und dem Ablegekopf entstandenen Streifenlänge geregelt wird.

5. Verfahren nach Anspruch 4, beim der der schrittweise Aufbau der Verstärkungsstruktur **dadurch** erfolgt, dass während sich der Formkörper dreht, der Ablegekopf in eine die Formkörper-Drehachse umfassende Ebene gebracht wird, wobei die Regelung der einheitlichen Menge von der Drehung des Formkörpers gesteuert wird.

6. Verfahren nach einem der Ansprüche 1 bis 5, bei dem zum Zusammenfügen der Fäden mittels einer Elastomermischung die Fäden parallel in einen Konfektionierer eingeführt werden, der eine Formkammer aufweist, der die Mischung zugeführt wird, wobei der Konfektionierer eine Austrittsöffnung für den Streifen aufweist.

7. Verfahren nach einem der Ansprüche 1 bis 6, bei dem die Verstärkungsstruktur mehrere aus den Fäden gebildete Bögen aufweist, die durch Ablegen nacheinander von benachbarten Streifenabschnitten entstehen.

8. Verfahren nach einem der Ansprüche 1 bis 7, bei dem die Verstärkungsstruktur Teil eines unter der Lauffläche angeordneten Gürtels ist.

9. Verfahren nach einem der Ansprüche 1 bis 7, bei dem die Verstärkungsstruktur Teil einer Karkasse ist.

10. Vorrichtung zur Herstellung einer Verstärkungsstruktur für Reifen, wobei die Verstärkungsstruktur überwiegend parallel zueinander verlaufende Fäden aufweist, die Vorrichtung zum Einsatz in Zusammenarbeit mit einem überwiegend toroidalen Formkörper (1) bestimmt ist, auf dem die Verstärkungsstruktur durch Aufbringen von nebeneinander angeordneten, aus dem Faden gebildeten Bögen nach einem für den Faden erwünschten Verlauf an der Oberfläche des Formkörpers schrittweise aufgebaut wird, mit:
• einem Konfektionierer (5) mit einer Eingangsöffnung zum Einführen der Fäden (2), einer Gummierkammer (50), einer Förderpumpe zum Fördern einer Elastomermischung ins Innere der Gummierkammer, einer Austrittsöffnung für einen Streifen (20), der aus den durch die Mischung zusammengefügten Fäden besteht,
• einer Streifenschneideeinrichtung (48) zum Schneiden von aufeinander folgenden Streifenabschnitten,
• einer Ablegevorrichtung (4) zum Ablegen der aufeinander folgenden Streifenabschnitte auf dem Formkörper mit einem Bezugsrahmen, zu dem der Formkörper in bekannter Weise positioniert werden kann, wobei die Ablegevorrichtung einen Kopf mit einer Streifenführungsbahn und einer Belegvorrichtung umfasst, die mit dem Formkörper und einem Streifendrehmechanismus zusammenwirkt, mit dem die Seite des Streifens, die von dem Ablegekopf mit dem Formkörper in Berührung gebracht wird, gewendet werden kann, wobei die Vorrichtung mindestens ein Stellglied zur Führung des Kopfes zum Bezugsrahmen aufweist.

11. Vorrichtung nach Anspruch 10 mit einer Kontrolleinheit zur Kontrolle der Drehbewegung des Formkörpers, der Bewegung des Kopfes zum Rahmen und der Förderpumpe, wobei die Einheit so ausgelegt ist, dass die pro Streifenlängeneinheit durch die Förderpumpe ins Innere der Gummierkammer beförderte Mischungsmenge von der Stellung abhängt, die von der Streifenlängeneinheit während des Ablegens auf dem Formkörper eingenommen wird.

12. Vorrichtung nach Anspruch 10 mit einer Kontrolleinheit zur Kontrolle der Drehbewegung des Formkörpers, der Bewegung des Kopfes zum Rahmen und der Förderpumpe, wobei die Einheit so ausgelegt ist, dass das pro Streifenlängeneinheit durch die Förderpumpe ins Innere der Gummierkammer beförderte Mischungsvolumen von dem Volumen abhängt, das von der Streifenlängeneinheit nach dem Ablegen auf dem Formkörper eingenommen wird.

13. Vorrichtung nach Anspruch 10 mit einem zwischen dem Konfektionierer (5) und der Ablegevorrichtung (4) angeordneten Streifenlängenausgleichsbereich.
